# EUROPEAN PATENT SPECIFICATION

(11) **EP 3 072 094 B1**
(45) Date of publication and mention of the grant of the patent: **14.10.2020**
(21) Application number: 14828513.3
(22) Date of filing: 20.11.2014
(51) Int. Cl.: G06Q 20/34

(54) **BIOMETRIC AUTHENTICATION SYSTEM AND BIOMETRIC AUTHENTICATION METHOD**
BIOMETRISCHES IDENTIFIKATIONSVERFAHREN UND VORRICHTUNG
ÉQUIPMENT ET MÉTHODE D'IDENTIFICATION BIOMÉTRIQUE

(30) Priority: 20.11.2013 IT VR20130247
(43) Date of publication of application: 28.09.2016
(73) Proprietor: Zorzan, Ivano Silvio, 37051 Bovolone (VR) (IT)
(72) Inventor: Zorzan, Ivano Silvio, 37051 Bovolone (VR) (IT)
(74) Representative: Fisauli, Beatrice A. M.
(86) International application number: PCT/IB2014/066198
(87) International publication number: WO 2015/075664

(56) References cited:
- EP-A2- 2 175 428
- WO-A1-2007/110142
- WO-A2-2006/014205
- US-A1- 2006 226 951
- US-A1- 2009 150 994

## Description

The present invention refers in general to a safety belt. More particularly, it refers to a safety belt that ensures greater safety and comfort to the user.

The present invention refers in general to a biometric authentication system and a biometric authentication method performing the authentication by means of biometric data. More particularly, it refers to a system and a method for the authentication by means of biometric data while ensuring the privacy of the person to be authenticated.

In order to perform the authentication of a user, for instance to have access to a given environment or to perform a given operation, it becomes more and more frequent to verify the user with the corresponding biometric data which are to be intended as physiological characteristics of a person, such as the fingerprint, the shape of the face or hand, the retina, the iris and more.

Usually, the most widely used biometric datum in authentication procedures is the fingerprint but the system and method according to the present invention may be implemented also by utilizing other biometric data.

The known procedure to manage the biometric data involves the transformation of the biometric data into a mathematical template, namely a mathematical description of the biometric datum. In the case of a fingerprint, the transformation of the mathematical datum into a mathematical template occurs through the definition of the map of the minutiae, namely the characteristic points of the fingerprint, the minutiae map being then transformed into a mathematical template.

The solutions provided to date utilizing the biometric data to validate the user involve a data external storage.

For instance, if a firm wants to install an access control system through fingerprint, the biometric data, namely the fingerprint of each employee must be stored into a server inside the firm.

When the user must effect the access, the control system provides at first the reading of the fingerprint of the user by means of a suitable reader and then, a comparison between the biometric datum collected and the biometric datum already recorded in the server inside the firm.

A system like this is described in the International Patent Application Serial No. WO 2006/014205 A2.

It is easy to understand how in systems like that the privacy of the user is not ensured since a firm using this type of system is compelled to retain the biometric data of the users.

Besides, the firm must take responsibility for any theft of personal biometric data.

Furthermore, solutions are known which do not involve the storage of biometric data since the biometric data are recorded in a medium owned by the user who must be authenticated.

Systems of the aforesaid types are described in patent documents such as the above-mentioned International Patent Application Serial No. WO 2006/014205 A2 or the European Patent Application EP 2175428 A2.

However, in this case, both the biometric datum in the medium and the biometric datum directly read by the user by means of a suitable reader, for instance a fingerprint reader, are sent to an external device in which the comparison and the verification take place.

It is evident that also in this case it is not possible to ensure an absolute privacy since the biometric data are sent to an external device for the verification and here, these data could be collected undesirably. Essentially, also in this case the user has not a full control on his/her biometric data, namely the biometric data stored in the medium and the biometric data read by means of the suitable reader of biometric data.

In order to overcome these problems, media have been introduced on the market which contain the biometric datum to be verified and are provided with a biometric reader.

Media of this type are described, for instance, in the patent documents WO 2007/110142 A1 and WO 2013/160011 A1.

These media verify themselves the authenticity of the user by comparing the biometric datum stored in said media with the biometric datum read by the reader. In other words, the media have not to exchange any information with external devices as regards the biometric data read and stored; such media send just a confirmation of the authenticity of the user to the media reader or not.

In so doing, the privacy of the user is guaranteed. However, the medium needed for this system is complex and expensive since this medium must include not only the conventional devices but also a reader of biometric data.

Thus, it is very difficult to carry out a medium in the format of a classic credit card and in any case, such a medium has important costs that limit a normal spread of a medium of this type.

The aim and function of the present invention is to supply a biometric authentication system and a biometric authentication method using biometric data that guarantee an absolute privacy of the user who wants to be authenticated.

Another aim of the invention is to offer a biometric authentication system and method that verify safely the identity of a user who wants to have access to a determined environment or a determined activity.

A further aim of the invention is to provide a biometric authentication system and method that verify the access credentials of a user automatically.

The above-mentioned aims and other ones are achieved with a method for biometric authentication of a user through according to claim 1, a biometric authentication system according to claim 8 comprising a medium and a reading and communication device adapted to communicate with the medium, in which the medium comprises an electronic calculation device and a storage device in which a biometric datum of the user is stored, and the reading and communication device comprises a biometric sensor and a media reader connected to each other.

The method comprises the following steps:
- detecting a biometric datum of the user through a biometric sensor;
- sending the biometric datum, detected by the biometric sensor, through the media reader to the medium without performing any storage of the biometric datum in the reading and communication reading;
- comparing the detected biometric datum, through the electronic calculation device, with the biometric datum stored in the storage device;
- in the case of matching between the biometric datum stored in the storage device and the biometric datum detected by the sensor, sending a positive response through the medium to the reading and communication device, or in the case of mismatch between the biometric datum stored in the storage device and the biometric datum detected by the sensor, sending a negative response through the medium to the reading and communication device;
- in the case of a positive response, considering the user as correctly authenticated.

The method according to the invention ensures an absolute privacy of the user since the reading and communication device does not storage the detected biometric data and sends these data directly to the medium. The verification, namely the comparison between the detected biometric data and the stored biometric data, is performed by the medium whose owner and holder is always the user.

Moreover, while ensuring the utmost privacy, it is not necessary for the medium to have a biometric sensor whose presence would involve a considerable increase in the cost of realization of the medium.

Advantageously, the method may provide that the electronic calculation device in the medium processes the biometric datum detected by the biometric sensor so as to compare this datum with the biometric datum stored in the same medium in the case said stored biometric datum is, for instance, in the form of a mathematical template.

In order to further guarantee the privacy of the user and avoid unnecessary authentication procedures, the method according to the invention may provide that before performing the detection of the biometric datum of the user by means of the biometric sensor, the reading and communication device verifies the compatibility between the medium and the same reading and communication device.

For instance, in the case the medium is utilized on an apparatus of a typology for which the medium has not been enabled, the verification will be done even before performing the authentication operations.

Advantageously, in addition to the biometric datum of the user, a further piece of information regarding the user may be stored in the medium and read by the reading and communication device.

In other words, if the medium includes only the stored biometric datum, the medium may be utilized to obtain an authentication in anonymous form. If, on the contrary, the medium includes one or more pieces of information regarding the user, the reading and communication device may read them in the same medium so as to have additional user data which may be useful for any further applications.

In order to ensure that the most sensitive data, namely the biometric datum, are preserved in the best way, the further piece of information may be stored in the medium in a memory different from the storage device.

The aims and advantages of the invention are also achieved through a method for writing a biometric datum on a medium for the biometric authentication by means of a writing device, the medium comprising an electronic calculation device and a storage device in which the biometric datum of the user has to be stored, the writing device comprising a biometric sensor and a media writer connected to each other.

The writing method comprises the following steps:
- detecting a biometric datum of the user through a biometric sensor;
- sending the biometric datum, detected by the biometric sensor, through the media writer to the medium without performing any storage of the biometric datum in the writing device;
- processing the biometric datum detected by the biometric sensor by means of the electronic calculation device in the medium;
- storing the biometric datum in the medium by means of the storage device.

Due to the fact that the writing device does not store the detected biometric datum and sends the datum immediately to the medium, an absolute privacy of the user is guaranteed also during the writing.

Besides, in order to guarantee the writing operations, the writing method according to the invention may provide that in the medium, an identification code is stored which corresponds to the operator who has supervised the writing operations, and / or an identification code is stored which corresponds to the writing device which has written the biometric datum on the medium, and / or an identification code is stored which corresponds to the activity for which the medium may be used.

Concerning the identification code of the activity for which the medium may be utilized, a further piece of information is supplied to the medium. If this piece of information is verified before performing the operations of biometric authentication, it is possible to avoid a useless detection of the biometric datum through the biometric sensor provided in a reading and communication device.

The aims and advantages of the invention are also obtained through a biometric authentication system adapted to perform the biometric authentication of a user, comprising:
- a reading and communication device to read and communicate biometric data comprising a biometric sensor to detect a biometric datum of the user and a media reader connected to the biometric sensor;
- a medium for supporting the ownership of the user, comprising an electronic calculation device for receiving and verifying the biometric data detected by the reading and communication device and a storage device containing a stored biometric datum of the user.

In particular, the biometric system is characterized in that the reading and communication device sends the biometric datum detected by the biometric sensor directly to the medium by means of a media reader without any storage of the biometric datum detected, and that the electronic calculation device verifies the matching between the biometric datum detected and the biometric datum stored.

In this way, the reading and communication device must not retain the biometric datum which is transmitted by the biometric sensor only to the medium.

To support this aspect and guarantee the privacy of the user, the reading and communication device does not include any storage device.

Advantageously, in addition to the biometric datum of the user, a further piece of information regarding the user may be stored in the medium. This piece of information is useful depending on the application for which the medium is utilized.

Moreover, to ensure the maximum privacy for the user and retain the biometric datum, the medium may comprise a memory in which the further piece of information may be stored; in particular, this memory is separated from the storage device.

Advantageously, in the medium, an identification code may be stored which corresponds to the operator who has supervised the writing operations of the medium, and / or an identification code may be stored which corresponds to the writing device which has written the biometric datum on the medium, and/or an identification code may be stored which corresponds to the activity for which the medium may be used.

Further features and details of the invention may be better understood from the following specification which is supplied as a non-limiting example, as well as from the accompanying drawing, wherein:
Figure 1 is a flow diagram representative of the method of authentication by a user holding a medium;
Figure 2 is a flow diagram representative of the method for the writing of a biometric datum on the support.

The system consists of three elements:
1. a medium containing the biometric data and an electronic device with relevant program for the acquisition and the verification of biometric data;
2. a reading and communication device to read and communicate biometric data to be acquired by the user directly;
3. a writing device to write biometric data on the medium.

The medium comprises a storage device and an electronic device.

The storage device includes the biometric data of the user, holder of the medium. These biometric data are stored, for instance, using encryption so that it is not possible to decode them by using external devices to the medium, nor is it possible to exchange them with external devices to the medium.

The storage device may contain also other data of the user or other data that may be exchanged with external devices to the medium.

To guarantee the maximum protection of the biometric data storage in the medium, the biometric data may be recorded on different storage devices from those containing the data to be exchanged with external devices.

The electronic device, for instance in the form of a microchip, is capable to receive information such as one or more biometric data from a media reader. The electronic device is capable to process the biometric data sent by the media reader so that the data processing takes place internally to the medium itself by means of specific programs.

Furthermore, the electronic device is capable to make the comparison between biometric data, communicated to the electronic device by the media reader, and the biometric data contained in the storage device inside the medium.

Accordingly, the medium sends a negative or positive response by means of the electronic device on the base of the result of the comparison. In the positive case, the holder of the card is also the person who is using the card to request access.

The medium is produced in the form of a card but, obviously, it can have a different shape; for instance, the medium may be an electronic key or a pendant or other.

Besides, the medium may be provided with an electronic device different from the microchip; for instance, the support may be provided with a Tag-RF or other electronic calculation device.

The reading and communication device comprises:
- a biometric sensor;
- a media reader;
- an interface communication device for the communication between the biometric sensor and the media reader.

The reading and communication device detects the biometric data of a user through the biometric sensor. The biometric data are sent through the interface communication device to the media reader which, in turn, will send them to the medium.

The reading and communication device is a reading device of biometric data which has not to perform any operations on the data acquired since this reading device has simply to transmit the data detected by the biometric sensor through the media reader **directly** to the medium.

The reading and communication device may comprise possibly a volatile service memory which is automatically erased after each operation.

The writing device is similar to the reading and communication device but the writing device is intended to supervise the acquisition phase of the biometric datum and the storage of the biometric datum in the medium.

The writing device may be activated only by an operator who must be specifically identified and verified by means of a biometric medium.

The writing device comprises:
- a biometric sensor;
- a media writer;
- an interface communication device for the communication between the biometric sensor and the media writer.

Once the writing device has been activated, also through the authentication of the operator-supervisor with his/her biometric medium, the writing device waits for the presentation of a blank medium, i.e. empty, and begins the phase of acquisition of biometric data of the user by means of the biometric sensor.

The biometric datum, acquired by the biometric sensor, is transmitted through the interface communication device to the media writer which in turn sends the biometric datum to the blank medium.

The medium performs internally, through its electronic device, the transformation of the biometric datum into a mathematical template.

In the writing and storage phase, the medium may send some pieces of information to the writing device regarding the processing status as beginning and end of the processing, data that could not be processed, and more.

One or more biometric data may be processed and stored on the medium.

Furthermore, to ensure the safety of the writing operation, the writing device may send to the support, in addition to the biometric data, also identification codes identifying both the writing device itself and the medium utilized by the operator supervising the operation. In this way, it is possible to guarantee a perfect traceability of the so-obtained medium or to know which writing device has been used for the generation of a determined medium and to know which operator has supervised the operation without the necessity of knowing any information regarding the holder of the medium itself.

Also the writing device may be equipped only with a volatile service memory which is automatically erased after each operation.

Accordingly, the medium may bear, written/stored, the identification code of the writing device which has performed the writing operation and / or the identification code of the operator who has supervised the writing operation, as described above.

Similarly, the medium may bear, written/stored, also an identification code identifying the purpose of use.

In this way, before the reading and communication device proceeds with the detection of the biometric datum and the authentication procedure, the reading and communication device may verify the identification code in the support, which identifies the purpose of use and accept or not to continue he authentication procedure.

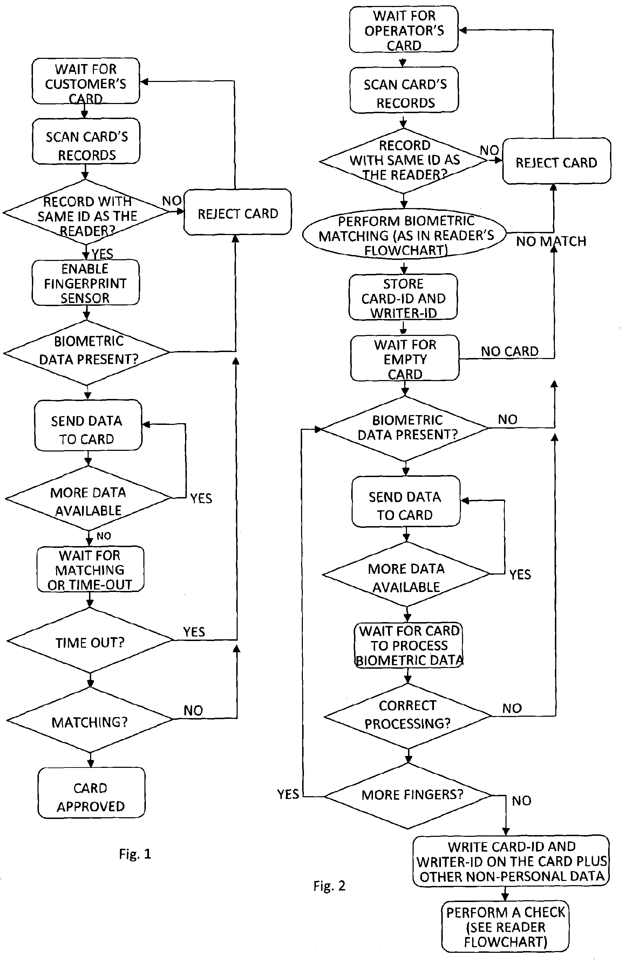

The authentication method as illustrated in the flow diagram in Figure 1 provides initially that the reading and communication device is waiting to connect to a medium, for instance a card.

Once the medium has been connected to the media reader provided in the reading and communication device, the reading and communication device itself verifies the compatibility of the medium.

In other words, the reading and communication device verifies the identification code stored in the medium relating to the writing device and the identification code stored in the medium relating to the purpose for which the medium has been designed.

The reading and communication device verifies its compatibility with these identification codes. In the case there is no matching, the reading and communication device refuses the medium and the authentication procedure ends without any authentication.

On the contrary, in the case there is compatibility, the reading and communication device enables the biometric sensor with which the device is provided.

The user has to be arranged in such a way that the biometric sensor can detect his/her biometric data, for instance a fingerprint.

The biometric data detected by the biometric sensor are sent through the interface communication device and the media reader to the medium without any storage of said biometric data in the reading and communication device.

Then, the electronic calculation device performs the processing of the biometric datum through its own program and compares it with the biometric datum contained in the storage device of the medium.

If there is matching between the biometric datum detected by the biometric sensor and the biometric datum stored on the medium, the user is authenticated and can have access to the environment or equipment with limited access.

Moreover, any data on the medium, different from the biometric data stored in the medium, are communicated from the medium to the reading and communication device.

At first, the writing method of the medium, illustrated in the flow diagram in Figure 2, provides that the writing device verifies the compatibility with the medium of the operator who has to supervise the writing of the new medium.

In the case the compatibility between the medium of the operator and the writing device has been ascertained, also an authentication procedure is performed to verify whether the person who is supervising the writing of the new medium is actually an authorized operator.

The new medium is inserted in the media writer in the writing device.

Then, the writing device detects, through the biometric sensor, the biometric data of the holder of the new medium and the same biometric data are directly sent to the new medium. In this way, no detected biometric datum is stored in the writing device and the privacy of the user is guaranteed also in the writing phase of his/her medium.

The electronic calculation device in the medium performs the processing and storage of the biometric data and then, this device performs also a verification of the correctness of the processing performed.

In the event of erroneous processing, it is necessary to perform the phases of detection, processing and storage of the biometric data once again.

In the case additional fingerprints have to be stored, the phases of detection, processing and storage of the biometric data are performed for each biometric datum to be stored in the new medium.

Once the storage phase of the biometric data has finished, the following identification codes are also written in the new medium: the identification code of the operator who is supervising the writing, the identification code of the writing device and the identification code of the purpose for which the new medium will be used.

The last step of the writing procedure is to verify that the biometric data as processed and stored correspond to the user, holder of the medium that has just been written. In other words, it is necessary to verify that the medium operates correctly.

To do this, the writing device goes into read mode so as to operate similarly to a reading and communication device by using an authentication method as described above.

A system as proposed allows to overcome the main problem of the cards that require a validation, such as ATM cards, credit cards, membership cards issued by institutions, clubs, associations and so on.

Indeed, at present the validation of the user utilizing these cards occurs through a secret code, usually called PIN (Personal Identification Number). As a matter of fact, the PIN verifies only the card but does not ascertain whether the card is utilized by the actual owner of the medium.

On the contrary, if the biometric data of the holder are inserted into the card, two immediate advantages are obtained: the validation of the card and the verification that the person using the card is actually the authorized person (owner).

The system according to the invention as described above overcomes all the problems of the authentication systems of known typology in which the user is verified by reading the biometric datum but the biometric information to be compared is stored in the verification apparatus.

Conversely, in the system according to the present invention, the biometric information is stored inside the medium itself.

At the same time, the system according to the invention overcomes the problems of the known authentication systems that retain the biometric datum in the medium.

Indeed, in the system according to the invention, the biometric information are processed inside the medium itself, namely, the biometric data remain inside the medium itself and are not transmitted outside, nor for the verification phase (also called matching), nor for the acquisition phase (also called enrolment). The verification of the biometric data in the medium is performed by a program in the medium, this program being implemented by the electronic device in the support. The program inside the medium performs the verification of the biometric data in the medium and compares these data with the data transmitted to the medium by the external reading and communication device provided with a biometric sensor.

A further difference consists in the fact that the two storage systems may also coexist simultaneously on the same medium. For instance, the same medium may be equipped with both a contact microchip and a RF-TAG so as to keep the biometric data separated from all the other data.

Below, two examples are described to illustrate the system according to the present invention.

A user purchases a card to have access to an automatic equipment.

At the time of purchase, his/her identity and his/her biometric data, for instance the data relating to his/her thumbprint, are controlled; the biometric data are transmitted to the card that performs the processing, the transformation into a mathematical template, the protection and the storage of the card.

Other data such as biographic information or registration codes may be added to the card.

At this point, the user may be validated by all those automatic apparatuses such as control systems of accesses by simply inserting his/her card and laying his/her thumb on the authentication system in the automatic apparatus to which the access is requested. Obviously, the authentication system of this automatic apparatus comprises a reading and communication device as that described above.

So, there is no need to remember a secret code. Furthermore, there is the certainty that the card is used by the legitimate owner at that time.

Moreover, if additional pieces of information such as the date of birth and fiscal code of the user or simply an indication of the age of the user should be present on the card, the card will be used even on automatic apparatuses that distribute products not suitable for certain age groups, for instance vending machines for the distribution of tobacco products, apparatuses for the game of chance such as slot machines, betting equipments, and so on.

Since all processing of the biometric datum is performed inside the medium itself and the used apparatuses are not provided with a memory, or the used apparatuses are provided with a reduced service volatile memory, the privacy of the user is fully guaranteed.

Besides, in order to obtain further protection of the privacy of the user, the system according to the invention may also be implemented in a completely anonymous form.

In fact, a second example of implementation and utilization of the system according to the invention provides that the medium acts as an anonymous authorization system to have access to certain areas or equipments without providing any information about the user but simply emitting an enabling or refusing signal.

This is achieved by causing that only the biometric datum of the owner is written on the medium without adding any data that could trace back to the identity of the person.

For instance, concerning the cigarette vending machines, it is sufficient to issue the medium in the form of a card only to adults without indicating on the medium any information regarding the identity of the user. Thus, the system ensures that the user is authorized to access bus does not supply any information regarding the identity of the user and the biometric data.

The traceability system allows to know which writing apparatus has been used to generate the medium and who has supervised the writing operation and the supplying of the medium: in this way, it is possible to efficiently hinder any improper use.

On the contrary, in the present invention, the medium itself performs internally the comparison of the data in the medium with the data received from the external reader.

Furthermore, an absolute privacy is guaranteed, even in the writing phase when the biometric datum is written on the medium since the writing phase is performed completely inside the medium itself.

In other words, at the time in which it is necessary to acquire the biometric datum of the user to store it in the medium, it is the medium itself that receives the "raw" biometric data from the reading and communication device provided with a biometric sensor; and it is the medium itself with its electronic device and related program that processes the biometric data and changes these data into a mathematic template from which it is no more possible to trace back to the original biometric image.

The medium according to the example as described may comprise two different storage devices dedicated to contain different information having different degrees of protection. A first storage device may contain the biometric data that must not be exchanged with the outside. The second storage device may contain the data that may be exchanged with the outside.

Moreover, at present there is no medium to which two separate storage systems may be applied, one of them being dedicated to the management of the biometric data. Certainly, there exist media with two storage systems, for instance an ATM card with microchip and magnetic band but the two storage systems are dedicated to contain the same information.

According to a third example of implementation and utilization, the system according to the invention may be applied in the ATMs. It is possible to realize a bank card as an ATM card or a credit card in which to a conventional card provided with microchip or magnetic band, also an electronic device and a storage device as described above in connection with the medium described above are added.

If the biometric verification system is kept separate from the preexisting system containing the bank data, it is possible to obtain a card operating conventionally, namely through a secret code (PIN), on all the conventional systems but this card requires the biometric verification every time the card is used in un apparatus such as an ATM or POS equipped with a biometric reader.

Variants to be considered as included in the scope of protection of the present invention are possible.

## Claims

1. Method for biometric authentication of a user through a biometric authentication system comprising a medium and a reading and communication device adapted to communicate with the medium, the medium comprising an electronic calculation device and a storage device in which a biometric datum of the user is stored, the reading and communication device comprising a biometric sensor and a media reader connected to each other, said method comprising the following steps:
- detecting a biometric datum of the user through a biometric sensor;
- sending the biometric datum, detected by the biometric sensor, through the media reader to the medium without performing any storage of the biometric datum in the reading and communication device, which transmits the raw data detected by the biometric sensor directly through the media reader to the medium, wherein the reading and communication device comprises a volatile service memory which is automatically erased after each reading and communication operation;
- comparing the detected biometric datum, through the electronic calculation device, with the biometric datum stored in the storage device, after a transformation, performed internally by the medium, of the detected biometric datum into a mathematical template;
- in the case of matching between the biometric datum stored in the storage device and the biometric datum detected by the sensor, sending a positive response through the medium to the reading and communication device, or in the case of mismatch between the biometric datum stored in the storage device and the biometric datum detected by the sensor, sending a negative response through the medium to the reading and communication device;
- in the case of a positive response, considering the user as correctly authenticated.

2. Method according to claim 1, wherein before making the comparison with the biometric datum stored, the electronic calculation device in the medium processes the biometric datum detected by the biometric sensor.

3. Method according to one of the preceding claims, wherein before detecting the biometric datum of the user through the biometric sensor, the reading and communication device verifies the compatibility between the medium and the reading and communication device.

4. Method according to one of the preceding claims, wherein in addition to the biometric datum of the user, a further piece of information regarding the user is stored in the medium, and wherein this piece of information is read by the reading and communication device.

5. Method according to the preceding claim, wherein the further piece of information is stored in the medium in a memory different from the storage device.

6. Method for writing a biometric datum on a medium for the biometric authentication by means of a writing device, the medium comprising an electronic calculation device and a storage device in which the biometric datum of the user has to be stored, the writing device comprising a biometric sensor and a media writer connected to each other, said method comprising the following steps:
- detecting a biometric datum of the user through a biometric sensor;
- sending the biometric datum, detected by the biometric sensor, through the media writer to the medium without performing any storage of the biometric datum in the writing device;
- processing the biometric datum detected by the biometric sensor by means of the electronic calculation device in the medium;
- storing the biometric datum in the medium by means of the storage device.

7. Method for writing at least one biometric datum on a medium according to the preceding claim, wherein in the medium, an identification code is stored which corresponds to the operator who has supervised the writing operations, and / or an identification code is stored which corresponds to the writing device which has written the biometric datum on the medium, and / or an identification code is stored which corresponds to the activity for which the medium may be used.

8. Biometric authentication system adapted to perform the biometric authentication of a user, comprising:
- a reading and communication device to read and communicate biometric data comprising a biometric sensor to detect a biometric datum of the user and a media reader connected to the biometric sensor;
- a medium for supporting the ownership of the user, comprising an electronic calculation device for receiving and verifying the biometric data detected by the reading and communication device and a storage device containing a stored biometric datum of the user;
**characterized in that** the reading and communication device sends the biometric datum detected by the biometric sensor directly as raw data to the medium by means of a media reader without any storage of the biometric datum detected, wherein the reading and communication device comprises a volatile service memory which is automatically erased after each reading and communication operation, and that the electronic calculation device verifies the matching between the biometric datum detected and the biometric datum stored, after the medium performs internally, through its electronic device, the transformation of the detected biometric datum into a mathematical template.

9. Biometric authentication system according to the preceding claim, wherein the reading and communication device does not include any storage device.

10. Biometric authentication system according to one of claims 8 or 9, wherein in addition to the biometric datum of the user, a further piece of information regarding the user is stored in the medium.

11. Biometric authentication system according to the preceding claim, wherein the medium comprises a memory in which the further piece of information is stored, this memory being separated from the storage device.

12. Biometric authentication system according to one of claims 8 to 11, wherein in the medium, an identification code is stored which corresponds to the operator who has supervised the writing operations of the medium, and / or an identification code is stored which corresponds to the writing device which has written the biometric datum on the medium, and/or an identification code is stored which corresponds to the activity for which the medium may be used.

## Patentansprüche

1. Verfahren zur biometrischen Authentifizierung eines Benutzers durch ein biometrisches Authentifizierungssystem, das einen Träger und eine Lese- und Kommunikationsvorrichtung umfasst, die geeignet ist, mit dem Träger zu kommunizieren, wobei der Träger eine elektronische Rechenvorrichtung und eine Speichervorrichtung umfasst, in der ein biometrisches Datum des Benutzers gespeichert ist, wobei die Lese- und Kommunikationsvorrichtung einen biometrischen Sensor und einen Trägerleser umfasst, die miteinander verbunden sind, wobei das Verfahren die folgenden Schritte umfasst:
- Erfassung eines biometrischen Datums des Benutzers durch einen biometrischen Sensor;
- Senden des biometrischen Datums, das von dem biometrischen Sensor erfasst wird, durch den Medienleser zu dem Medium, ohne eine Speicherung des biometrischen Datums in der Lese- und Kommunikationsvorrichtung durchzuführen, die die von dem biometrischen Sensor erfassten Rohdaten direkt durch den Medienleser zu dem Medium überträgt, wobei die Lese- und Kommunikationsvorrichtung einen flüchtigen Dienstspeicher umfasst, der nach jeder Lese- und Kommunikationsoperation automatisch gelöscht wird;
- Vergleichen des erfassten biometrischen Datums durch die elektronische Berechnungsvorrichtung mit dem in der Speichervorrichtung gespeicherten biometrischen Datum nach einer intern durch das Medium durchgeführten Transformation des erfassten biometrischen Datums in eine mathematische Schablone;
- im Falle einer Übereinstimmung zwischen dem in der Speichervorrichtung gespeicherten biometrischen Datum und dem durch den Sensor erfassten biometrischen Datum, Senden einer positiven Antwort durch das Medium an die Lese- und Kommunikationsvorrichtung, oder im Falle einer Nichtübereinstimmung zwischen dem in der Speichervorrichtung gespeicherten biometrischen Datum und dem durch den Sensor erfassten biometrischen Datum, Senden einer negativen Antwort durch das Medium an die Lese- und Kommunikationsvorrichtung;
- im Falle einer positiven Antwort, Betrachtung des Benutzers als korrekt authentifiziert.

2. Verfahren nach Anspruch 1, wobei vor dem Vergleich mit dem gespeicherten biometrischen Datum die elektronische Berechnungsvorrichtung in dem Medium das von dem biometrischen Sensor erfasste biometrische Datum verarbeitet.

3. Verfahren nach einem der vorhergehenden Ansprüche, wobei vor der Erfassung des biometrischen Datums des Benutzers durch den biometrischen Sensor die Lese- und Kommunikationsvorrichtung die Kompatibilität zwischen dem Medium und der Lese- und Kommunikationsvorrichtung verifiziert.

4. Verfahren nach einem der vorhergehenden Ansprüche, wobei zusätzlich zum biometrischen Datum des Benutzers eine weitere Information bezüglich des Benutzers in dem Medium gespeichert wird und wobei diese Information durch die Lese- und Kommunikationsvorrichtung gelesen wird.

5. Verfahren nach dem vorhergehenden Anspruch, bei dem die weitere Information in dem Medium in einem von der Speichervorrichtung verschiedenen Speicher gespeichert wird.

6. Verfahren zum Schreiben eines biometrischen Datums auf einen Träger für die biometrische Authentifizierung mit Hilfe einer Schreibvorrichtung, wobei der Träger eine elektronische Rechenvorrichtung und eine Speichervorrichtung umfasst, in der das biometrische Datum des Benutzers gespeichert werden muss, wobei die Schreibvorrichtung einen biometrischen Sensor und einen Medienschreiber umfasst, die miteinander verbunden sind, wobei das Verfahren die folgenden Schritte umfasst:
- Erfassung eines biometrischen Datums des Benutzers durch einen biometrischen Sensor;
- Senden des biometrischen Datums, das durch den biometrischen Sensor erfasst wurde, durch den Medienschreiber auf den Datenträger, ohne eine Speicherung des biometrischen Datums in der Schreibvorrichtung durchzuführen;
- Verarbeiten des von dem biometrischen Sensor erfassten biometrischen Datums mit Hilfe der elektronischen Rechenvorrichtung in dem Medium;
- Speichern des biometrischen Datums in dem Medium mit Hilfe der Speichervorrichtung.

7. Verfahren zum Schreiben mindestens eines biometrischen Datums auf ein Medium nach dem vorhergehenden Anspruch, bei dem in dem Medium ein Identifikationscode gespeichert wird, der dem Bediener entspricht, der die Schreibvorgänge überwacht hat, und/oder ein Identifikationscode gespeichert wird, der der Schreibvorrichtung entspricht, die das biometrische Datum auf das Medium geschrieben hat, und/oder ein Identifikationscode gespeichert wird, der der Aktivität entspricht, für die das Medium verwendet werden kann.

8. Biometrisches Authentisierungssystem, das zur Durchführung der biometrischen Authentisierung eines Benutzers geeignet ist und Folgendes umfasst
- eine Lese- und Kommunikationsvorrichtung zum Lesen und Kommunizieren biometrischer Daten, die einen biometrischen Sensor zur Erfassung eines biometrischen Datums des Benutzers und einen mit dem biometrischen Sensor verbundenen Medienleser umfasst;
- ein Medium zur Unterstützung des Eigentums des Benutzers, das eine elektronische Berechnungsvorrichtung zum Empfangen und Verifizieren der biometrischen Daten, die von der Lese- und Kommunikationsvorrichtung erfasst werden, und eine Speichervorrichtung, die ein gespeichertes biometrisches Datum des Benutzers enthält, umfasst;
**dadurch gekennzeichnet, dass** die Lese- und Kommunikationsvorrichtung das durch den biometrischen Sensor erfasste biometrische Datum direkt als Rohdaten mittels eines Medienlesers ohne Speicherung des erfassten biometrischen Datums an das Medium sendet, wobei die Lese- und Kommunikationsvorrichtung einen flüchtigen Dienstspeicher umfasst, der nach jeder Lese- und Kommunikationsoperation automatisch gelöscht wird, und dass die elektronische Berechnungsvorrichtung die Übereinstimmung zwischen dem erfassten biometrischen Datum und dem gespeicherten biometrischen Datum verifiziert, nachdem das Medium intern durch seine elektronische Vorrichtung die Transformation des erfassten biometrischen Datums in eine mathematische Vorlage durchführt.

9. Biometrisches Authentifizierungssystem nach dem vorhergehenden Anspruch, wobei die Lese- und Kommunikationsvorrichtung keine Speichervorrichtung enthält.

10. Biometrisches Authentisierungssystem nach einem der Ansprüche 8 oder 9, wobei zusätzlich zum biometrischen Datum des Benutzers eine weitere Information über den Benutzer in dem Medium gespeichert wird.

11. Biometrisches Authentisierungssystem nach dem vorhergehenden Anspruch, wobei das Medium einen Speicher umfasst, in dem die weitere Information gespeichert ist, wobei dieser Speicher von der Speichervorrichtung getrennt ist.

12. Biometrisches Authentifizierungssystem nach einem der Ansprüche 8 bis 11, wobei in dem Medium ein Identifikationscode gespeichert ist, der dem Bediener entspricht, der die Schreibvorgänge des Mediums überwacht hat, und/oder ein Identifikationscode gespeichert ist, der der Schreibvorrichtung entspricht, die das biometrische Datum auf das Medium geschrieben hat, und/oder ein Identifikationscode gespeichert ist, der der Aktivität entspricht, für die das Medium verwendet werden kann.

## Revendications

1. Procédé d'authentification biométrique d'un utilisateur par un système d'authentification biométrique comprenant un support et un dispositif de lecture et de communication adapté pour communiquer avec le support, le support comprenant un dispositif de calcul électronique et un dispositif de stockage dans lequel une donnée biométrique de l'utilisateur est stockée, le dispositif de lecture et de communication comprenant un capteur biométrique et un lecteur de support connectés l'un à l'autre, ledit procédé comprenant les étapes suivantes :
- détection d'une donnée biométrique de l'utilisateur au moyen d'un capteur biométrique ;
- envoi de la donnée biométrique, détectée par le capteur biométrique, par l'intermédiaire du lecteur de support au support sans effectuer aucun stockage de la donnée biométrique dans le dispositif de lecture et de communication, qui transmet les données brutes détectées par le capteur biométrique directement par l'intermédiaire du lecteur de support au support, dans lequel le dispositif de lecture et de communication comprend une mémoire de service volatile qui est automatiquement effacée après chaque opération de lecture et de communication;
- comparaison de la donnée biométrique détectée, par l'intermédiaire du dispositif de calcul électronique, avec la donnée biométrique stockée dans le dispositif de stockage, après une transformation, effectuée en interne par le support, de la donnée biométrique détectée en un modèle mathématique ;
- en cas de concordance entre la donnée biométrique stockée dans le dispositif de stockage et la donnée biométrique détectée par le capteur, envoi d'une réponse positive par le biais du support au dispositif de lecture et de communication, ou en cas de non-concordance entre la donnée biométrique stockée dans le dispositif de stockage et la donnée biométrique détectée par le capteur, envoi d'une réponse négative par le biais du support au dispositif de lecture et de communication ;
- dans le cas d'une réponse positive, en considérant l'utilisateur comme correctement authentifié.

2. Méthode selon la revendication 1, dans laquelle, avant d'effectuer la comparaison avec la donnée biométrique stockée, le dispositif de calcul électronique du support traite la donnée biométrique détectée par le capteur biométrique.

3. Méthode selon l'une des revendications précédentes, dans laquelle, avant de détecter la donnée biométrique de l'utilisateur par le capteur biométrique, le dispositif de lecture et de communication vérifie la compatibilité entre le support et le dispositif de lecture et de communication.

4. Procédé selon l'une des revendications précédentes, dans lequel, en plus de la donnée biométrique de l'utilisateur, une autre information concernant l'utilisateur est stockée sur le support, et dans lequel cette information est lue par le dispositif de lecture et de communication.

5. Procédé selon la revendication précédente, dans lequel l'autre information est stockée sur le support dans une mémoire différente du dispositif de stockage.

6. Procédé d'écriture d'une donnée biométrique sur un support pour l'authentification biométrique au moyen d'un dispositif d'écriture, le support comprenant un dispositif de calcul électronique et un dispositif de stockage dans lequel la donnée biométrique de l'utilisateur doit être stockée, le dispositif d'écriture comprenant un capteur biométrique et un dispositif d'écriture de support connectés l'un à l'autre, ledit procédé comprenant les étapes suivantes :
- détection d'une donnée biométrique de l'utilisateur au moyen d'un capteur biométrique ;
- envoi de la donnée biométrique, détectée par le capteur biométrique, par l'intermédiaire du graveur de support sur le support sans effectuer aucun stockage de la donnée biométrique dans le dispositif d'écriture ;
- le traitement de la donnée biométrique détectée par le capteur biométrique au moyen du dispositif de calcul électronique du support ;
- le stockage des données biométriques sur le support au moyen du dispositif de stockage.

7. Procédé pour écrire au moins une donnée biométrique sur un support selon la revendication précédente, dans lequel sur le support un code d'identification est stocké qui correspond à l'opérateur qui a supervisé les opérations d'écriture, et/ou un code d'identification est stocké qui correspond au dispositif d'écriture qui a écrit la donnée biométrique sur le support, et/ou un code d'identification est stocké qui correspond à l'activité pour laquelle le support peut être utilisé.

8. Système d'authentification biométrique adapté pour effectuer l'authentification biométrique d'un utilisateur, comprenant :
- un dispositif de lecture et de communication pour lire et communiquer des données biométriques comprenant un capteur biométrique pour détecter une donnée biométrique de l'utilisateur et un lecteur de média connecté au capteur biométrique ;
- un support pour soutenir la propriété de l'utilisateur, comprenant un dispositif de calcul électronique pour recevoir et vérifier les données biométriques détectées par le dispositif de lecture et de communication et un dispositif de stockage contenant une donnée biométrique stockée de l'utilisateur ;
**caractérisé en ce que** le dispositif de lecture et de communication envoie les données biométriques détectées par le capteur biométrique directement sous forme de données brutes au support au moyen d'un lecteur de support sans aucun stockage des données biométriques détectées, dans lequel le dispositif de lecture et de communication comprend une mémoire de service volatile qui est automatiquement effacée après chaque opération de lecture et de communication, et **en ce que** le dispositif de calcul électronique vérifie la correspondance entre les données biométriques détectées et les données biométriques stockées, après que le support effectue en interne, par l'intermédiaire de son dispositif électronique, la transformation des données biométriques détectées en un modèle mathématique.

9. Système d'authentification biométrique selon la revendication précédente, dans lequel le dispositif de lecture et de communication ne comprend aucun dispositif de stockage.

10. Système d'authentification biométrique selon l'une des revendications 8 ou 9, dans lequel, en plus des données biométriques de l'utilisateur, un autre élément d'information concernant l'utilisateur est stocké sur le support.

11. Système d'authentification biométrique selon la revendication précédente, dans lequel le support comprend une mémoire dans laquelle l'information supplémentaire est stockée, cette mémoire étant séparée du dispositif de stockage.

12. Système d'authentification biométrique selon l'une des revendications 8 à 11, dans lequel sur le support un code d'identification est stocké correspondant à l'opérateur qui a supervisé les opérations d'écriture du support, et/ou un code d'identification est stocké correspondant au dispositif d'écriture qui a écrit les données biométriques sur le support, et/ou un code d'identification est stocké correspondant à l'activité pour laquelle le support peut être utilisé.
